# EUROPÄISCHE PATENTSCHRIFT

(11) **EP 3 878 732 B1**
(45) Veröffentlichungstag und Bekanntmachung des Hinweises auf die Patenterteilung: **22.10.2025**
(21) Anmeldenummer: 21162364.0
(22) Anmeldetag: 12.03.2021
(51) Int. Cl.: B63H 20/00, B63J 3/04, B63H 3/00, B63H 5/15

(54) **VERFAHREN UND VORRICHTUNG ZUM EINSTELLEN DER STRÖMUNGSEIGENSCHAFTEN EINES PROPELLERS**
METHOD AND DEVICE FOR ADJUSTING THE VOLTAGE OF A PROPELLER
PROCÉDÉ ET DISPOSITIF DE RÉGLAGE DES CARACTÉRISTIQUES DE DÉBIT D'UNE HÉLICE

(30) Priorität: 13.03.2020 DE 102020107038
(43) Veröffentlichungstag der Anmeldung: 15.09.2021
(73) Patentinhaber: Torqeedo GmbH, 82234 Wessling (DE)
(72) Erfinder: Biebach, Jens, 82327 Tutzing (DE); Despineux, Frank, 82234 Weßling (DE)
(74) Vertreter: Nordmeyer, Philipp Werner

(56) Entgegenhaltungen:
- EP-A1- 2 591 993
- CN-B- 105 398 558
- FR-A1- 3 017 597
- GB-A- 1 131 611
- US-A1- 2008 293 312
- US-A1- 2011 049 882
- US-A1- 2017 240 261
- US-B1- 6 802 749

## Beschreibung

### Technisches Gebiet

Es wird ein Verfahren und ein Antriebssystem mit einer Vorrichtung zum Einstellen der Strömungseigenschaften eines Propellers des Antriebssystems für Wasserfahrzeuge, insbesondere für Boote und Schiffe, abhängig vom Betriebszustand offenbart.

### Stand der Technik

Zum Antrieb von Wasserfahrzeugen kommen vermehrt Antriebssysteme zum Einsatz, die einen Elektromotor als Antrieb aufweisen. Elektromotoren weisen einige Vorteile gegenüber Verbrennungsmotoren auf. Dazu gehören ein nahezu konstantes Drehmoment, ein sehr hoher Wirkungsgrad und keine direkte Produktion von Verbrennungsprodukten wie Kohlendioxid, Kohlenmonoxid und Stickoxide. Als Energiespeicher kommen Batterien oder Akkumulatoren zum Einsatz. Die Speicherkapazität von Batterien und Akkumulatoren ist jedoch begrenzt. Eine gewisse Autarkie, sodass ein Wiederaufladen der Batterien oder Akkumulatoren über ein Stromnetz weniger häufig erfolgen muss beziehungsweise die Reichweite erhöht werden kann, ist daher wünschenswert.

Die Antriebssysteme von Wasserfahrzeugen wie beispielsweise von Booten und Schiffen weisen unter anderem Propeller auf, die die Rotation beziehungsweise das Drehmoment des Antriebs in Vortrieb beziehungsweise Schub umwandeln. Propeller weisen Propellerflügel auf, die so geformt und ausgerichtet sind, dass sie bei der Rotationsbewegung des Propellers vom umgebenden Medium, hier Wasser, schräg oder asymmetrisch umströmt werden. Die Propellerflügel erfahren einen dynamischen Vortrieb, dessen axiale Komponente einerseits vom Lager des Propellers aufgenommen und als Schub bezeichnet wird und andererseits eine entgegengesetzt gerichtete Strömung des Mediums, die als Rotorabstrahl bezeichnet wird, bewirkt.

Über einen Propeller kann auch ein Generator zur Erzeugung von elektrischer Energie angetrieben werden. Wird ein Generator über einen Propeller durch eine Wasserströmung angetrieben, spricht man von Hydrogeneration.

Es ist bekannt Batterien und Akkumulatoren, die ein Antriebsystem eines Wasserfahrzeugs mit elektrischer Energie versorgen, durch nicht stromnetzgebundene Systeme wie beispielsweise Solarzellen aufzuladen. Es ist auch bekannt Hydrogeneratoren bei Wasserfahrzeugen mitzuführen, um elektrische Energie für Batterien oder Akkumulatoren zu erzeugen. Dabei wird Strömung relativ zu dem Wasserfahrzeug ausgenützt. Jedoch ist ein separater Hydrogenerator ein zusätzliches System mit gewissem Platzbedarf und Gewicht, das es gerade bei kleineren Wasserfahrzeugen zu vermeiden gilt.

Die US 2017/0240261 A1 beschreibt eine Antriebseinrichtung mit Elektromotor und Propeller für ein Segelschiff.

### Darstellung der Erfindung

Die vorliegende Erfindung hat die Aufgabe die genannten Nachteile und Probleme des Stands der Technik zu vermeiden oder zumindest zu lindern und insbesondere Strömungseigenschaften für einen Propeller eines Antriebssystems abhängig vom Betriebszustand einzustellen.

Diese Aufgabe wird durch das Verfahren gemäß dem unabhängigen Anspruch 1 und das Antriebssystem gemäß dem nebengeordneten Anspruch 5 gelöst. Ausgestaltungen und Weiterbildungen der Gegenstände der unabhängigen Ansprüche sind Gegenstand der abhängigen Ansprüche. Die Merkmale der nachfolgend beschriebenen Gegenstände sowie Ausgestaltungen und Weiterbildungen sind in beliebiger technologisch sinnvoller Weise miteinander kombinierbar, es sei denn, dies ist explizit als ausgeschlossen beschrieben.

Ein erster Aspekt betrifft ein Verfahren zum Einstellen von Strömungseigenschaften eines Propellers eines Antriebssystems mit einem Elektromotor für Wasserfahrzeuge, insbesondere für Boote und Schiffe, abhängig vom Betriebszustand. Das Verfahren umfasst die Schritte:
Ermitteln des Betriebszustands des Antriebssystems. Dabei liegt entweder ein Schubzustand oder ein freier Zustand oder ein blockierter Zustand oder ein Generatorzustand, insbesondere ein Hydrogenerationszustand, in welchem Energie durch Hydrogeneration gewonnen wird, vor.

Einstellen der Strömungseigenschaften basierend auf dem ermittelten Betriebszustand, wobei eine Anströmgeschwindigkeit des Propellers eingestellt wird.

Die Schritte können sowohl nacheinander als auch parallel ausgeführt werden.

Der Betriebszustand des Antriebssystems kann automatisch eingestellt werden oder der Betriebszustand kann zunächst durch einen Nutzer vorgegeben werden und der Nutzer gibt bevorzugt einen Schubzustand und/oder einen freien Zustand und/oder einen blockierten Zustand und/oder einen Generatorzustand als Betriebszustand vor.

Dieser automatisch eingestellte oder von einem Nutzer vorgegebene Betriebszustand wird ermittelt.

Ein zweiter Aspekt betrifft ein Antriebssystem für ein Wasserfahrzeug, umfassend einen Elektromotor zum Antreiben des Wasserfahrzeugs, einen Propeller und eine Vorrichtung zum Einstellen von Strömungseigenschaften des Propellers, abhängig vom Betriebszustand. Die Vorrichtung umfasst ein Modul zum Ermitteln eines Betriebszustands und Einstellmittel zum Einstellen der Strömungseigenschaften. Das Modul zum Ermitteln des Betriebszustands ist ausgestaltet und eingerichtet, den Betriebszustand des Antriebssystems zu ermitteln. Dabei liegt entweder ein Schubzustand oder ein freier Zustand oder ein blockierter Zustand oder ein Generatorzustand, insbesondere ein Hydrogenerationszustand, in welchem Energie durch Hydrogeneration gewonnen wird, vor. Das Modul prüft anhand eines oder mehrerer Entscheidungskriterien, ob der Schubzustand oder der Generatorzustand vorliegt. Die Einstellmittel zum Einstellen der Strömungseigenschaften sind dazu ausgestaltet und eingerichtet, die Strömungseigenschaften basierend auf dem ermittelten Betriebszustand einzustellen, wobei die Einstellmittel dazu ausgestaltet und eingerichtet sind, eine Anströmgeschwindigkeit des Propellers einzustellen.

Das Antriebssystem kann eine Batterie oder einen Akkumulator, einen Antrieb, insbesondere einen Elektromotor, optional ein Getriebe und einen Propeller umfassen. Der Antrieb beziehungsweise Elektromotor kann in dem Schubzustand den Propeller, optional über das Getriebe, antreiben. Dabei wird elektrische Energie durch die Batterie oder den Akkumulator bereitgestellt und verbraucht. Zudem kann der Antrieb beziehungsweise Elektromotor in dem Generatorzustand beziehungsweise Hydrogenerationszustand als Generator betrieben werden. Dabei wird der Antrieb oder Elektromotor von dem Propeller angetrieben und elektrische Energie an die Batterie oder den Akkumulator abgegeben.

Es wird zunächst ermittelt, ob der Schubzustand oder der Generatorzustand, insbesondere der Hydrogenerationszustand, gerade vorliegt. Das Modul zum Ermitteln des Betriebszustands prüft dabei anhand eines oder mehrerer Entscheidungskriterien, ob der Schubzustand oder der Generatorzustand beziehungsweise der Hydrogenerationszustand gerade vorliegt. Dabei kann beispielsweise durch ein Steuersignal, welches bei einem Umschalten von dem einen Betriebszustand in den anderen anliegt, und/oder anhand eines gemessenen Stroms von der Batterie oder dem Akkumulator zu dem Antrieb beziehungsweise dem Elektromotor durch das Modul zum Ermitteln des Betriebszustands als Entscheidungskriterium ermittelt werden, welcher der beiden Betriebszustände gerade vorliegt.

Basierend auf dem ermittelten Betriebszustand werden die Strömungseigenschaften für den Propeller des Antriebssystems möglichst optimal eingestellt. Dazu werden Faktoren, welche die Strömungseigenschaften beeinflussen, direkt eingestellt. Die Einstellmittel zum Einstellen der Strömungseigenschaften wirken dazu direkt auf besagte Faktoren ein.

Es wird somit abhängig von dem Betriebszustand, also dem Schubzustand oder dem Generatorzustand, derart auf die Strömungseigenschaften eingewirkt, dass diese bestmöglich für den momentan herrschenden Betriebszustand eingestellt sind. Bei dem Schubzustand kann, abhängig von der Geschwindigkeit relativ zu dem Medium, insbesondere der Geschwindigkeit des Wasserfahrzeugs beziehungsweise des Boots oder Schiffs relativ zu dem Wasser, die Strömungseigenschaften für den Propeller eingestellt werden. Dabei herrscht in der Regel eine hohe relative Geschwindigkeit beziehungsweise Geschwindigkeit mit der sich das Wasserfahrzeug beziehungsweise das Boot oder Schiff durch das Wasser bewegt. Hohe relative Geschwindigkeit in diesem Zusammenhang ist eine relative Geschwindigkeit von 1 kn [Knoten] bis 50 kn, bevorzugt 2 kn bis 30 kn und besonders bevorzugt von 5 kn bis 20 kn. Bei dem Generatorzustand beziehungsweise dem Hydrogenerationszustand können, abhängig von der relativen Geschwindigkeit des Mediums, insbesondere der Geschwindigkeit des Wassers relativ zu dem Wasserfahrzeug beziehungsweise zu dem Boot oder Schiff, die Strömungseigenschaften für den Propeller eingestellt werden.

Dabei herrscht in der Regel eine geringe relative Geschwindigkeit beziehungsweise Geschwindigkeit mit der das Wasser an dem Wasserfahrzeug beziehungsweise dem Boot oder Schiff vorbeiströmt. Geringe relative Geschwindigkeit in diesem Zusammenhang ist eine relative Geschwindigkeit von 7 kn oder weniger, bevorzugt 5 kn oder weniger und besonders bevorzugt von 3 kn oder weniger. Auch die unterschiedliche Krafteinwirkung auf den Propeller bei den beiden verschiedenen Betriebszuständen kann bei der Einstellung der Strömungseigenschaften für den Propeller berücksichtigt werden. So wird bei dem Schubzustand der Propeller von dem Antrieb beziehungsweise Elektromotor angetrieben und durch Ansaugen und Ausstoßen von Medium beziehungsweise Wasser ein Vortrieb oder Schub erzeugt. Bei dem Generatorzustand beziehungsweise dem Hydrogenerationszustand wird der Propeller durch vorbeiströmendes Medium beziehungsweise Wasser angetrieben und elektrische Energie erzeugt.

Durch die Optimierung der Strömungseigenschaften für einen Propeller des Antriebssystems kann das Antriebssystem sowohl in einem Schubzustand zum Antreiben über den Propeller, als auch in einem Generatorzustand beziehungsweise Hydrogenerationszustand zum Erzeugen von elektrischer Energie über den Propeller eingesetzt werden. Dabei werden die Strömungseigenschaften des Propellers derart optimiert, dass dieser in beiden Betriebszuständen so optimal wie möglich arbeitet.

Gemäß einer Ausgestaltung kann beim Einstellen der Strömungseigenschaften basierend auf dem ermittelten Betriebszustand eine Propellerform des Propellers geändert werden. Der Propeller ist in diesem Fall ausgestaltet und eingerichtet, seine Propellerform zu ändern. Die Einstellmittel zum Einstellen der Anströmgeschwindigkeit sind ausgestaltet und eingerichtet, eine Anströmgeschwindigkeit des Propellers einzustellen.

Vorliegend werden unter den Strömungseigenschaften für den Propeller, die eingestellt werden, die Propellerform und die Anströmgeschwindigkeit verstanden. Durch die Änderung der Propellerform kann eine optimale Form zum einen zur Erzeugung von Vortrieb beziehungsweise Schub durch den Propeller und zum anderen zur Erzeugung von elektrischer Energie durch Rotation des Propellers durch vorbeiströmendes Medium eingestellt je nach relativer Geschwindigkeit werden. Durch die Einstellung der Anströmgeschwindigkeit, kann der Propeller in jedem der Betriebszustände so optimal wie möglich in dem Medium arbeiten.

Durch die Einstellung der Anströmgeschwindigkeit und ggf. durch die Änderung der Propellerform kann der Wirkungsgrad des Antriebssystems sowohl im Schubzustand als auch im Generatorzustand maximiert werden.

Gemäß einer Ausgestaltung wird die Propellerform durch Ändern eines Anstellwinkels von Propellerblättern des Propellers oder Ändern einer Fläche der Propellerblätter oder Ändern der Anzahl der Propellerblätter geändert.

Gemäß einer weiteren Ausgestaltung ist der Propeller ausgestaltet und eingerichtet, einen Anstellwinkel von Propellerblättern des Propellers oder eine Fläche der Propellerblätter oder eine Anzahl der Propellerblätter zu ändern.

Die Propellerform wird durch den Anstellwinkel der Propellerblätter und/oder die Fläche der einzelnen Propellerblätter und/oder die Anzahl der Propellerblätter bestimmt. Der Anstellwinkel ist der Winkel eines Propellerblatts relativ zur Strömungsrichtung beziehungsweise um eine radiale Richtung des Propellers entlang welcher sich das Propellerblatt erstreckt. Bei einem großen Anstellwinkel liegt ein großer dynamischer Auftrieb beziehungsweise hier Vortrieb und ein hoher hydrodynamischer Wiederstand vor. Insbesondere bei langsamer Rotation des Propellers oder geringer relativer Geschwindigkeit beziehungsweise Strömungsgeschwindigkeit kann ein großer Anstellwinkel gewählt werden.

Bei einem kleinen Anstellwinkel liegt ein kleiner dynamischer Auftrieb beziehungsweise hier Vortrieb und ein geringer hydrodynamischer Widerstand vor. Insbesondere bei schneller Rotation des Propellers oder hoher relativer Geschwindigkeit beziehungsweise Strömungsgeschwindigkeit kann ein kleiner Anstellwinkel gewählt werden. Eine steigende Fläche der einzelnen Propellerblätter erhöht den Wirkungsgrad bei der Erzeugung von Vortrieb beziehungsweise Schub und umgekehrt. Hier wird unter Fläche eines Propellerblatts auch die Form des Propellerblatts verstanden. Eine steigende Anzahl der Propellerblätter senkt den Wirkungsgrad, erhöht die übertragbare Leistung, verringert den erforderlichen Durchmesser der einzelnen Propellerblätter und damit die Propellerblattgeschwindigkeit und erhöht die Laufruhe. Die Anzahl der Propellerblätter kann durch Wegklappen, Zusammenfalten oder Einziehen einzelner Propellerblätter verringert werden und umgekehrt.

Durch das Ändern der Propellerform mittels Ändern des Anstellwinkels, der Fläche und/oder der Anzahl der Propellerblätter können die Strömungseigenschaften für den Propeller besonders genau eingestellt werden.

Die Propellerform kann auch durch Ändern der Profildicke in Abhängigkeit vom Radius mindestens eines Propellerblatts und/oder durch Ändern der Profilwölbung mindestens eines Propellerblatts und/oder durch Ändern der Blattrücklage mindestens eines Propellerblatts und/oder durch Ändern des Skew mindestens eines Propellerblatts eingestellt werden.

Gemäß der Erfindung wird die Anströmgeschwindigkeit mittels einer Kortdüse eingestellt, d.h. die Einstellmittel zum Einstellen der Anströmgeschwindigkeit umfassen eine Kortdüse.

Eine Kortdüse ist ein konisch zulaufender, tragflügelähnlich profilierter Ring, der den Propeller eines Schiffes umgibt oder in axialer Richtung vor diesem angeordnet ist. Kortdüsen können drehbar gelagert und somit direkt als Ruder verwendet werden. Durch den Einsatz einer Kortdüse werden Strömungsverluste an Enden der Propellerblätter reduziert und ein höherer Massenstrom erzeugt. Die Geometrie der Kortdüse kann einstallbar ausgestaltet sein, sodass die Strömungseigenschaften für den Propeller, insbesondere die Anströmgeschwindigkeit, entsprechend des momentanen Betriebszustands eingestellt werden können.

Dies führt zu einer Steigerung des Wirkungsgrades sowohl im Schubzustand, als auch im Generatorzustand. Durch den ruhigeren Nachstrom aufgrund der Kortdüse werden zudem Ufer und Sohlen von Binnengewässern weniger angegriffen.

Es wird ein Durchmesser eines Düsenaustritts der Kortdüse eingestellt, d.h. die Kortdüse ist ausgestaltet und eingerichtet, einen Durchmesser eines Düsenaustritts der Kortdüse einzustellen.

Die Anströmgeschwindigkeit für den Propeller wird insbesondere bei vor dem Propeller angeordneten Kortdüsen durch den Durchmesser des Düsenaustritts eingestellt. Dabei erhöht sich die Anströmgeschwindigkeit mit abnehmendem Durchmesser des Düsenaustritts und umgekehrt.

Durch Einstellen des Durchmessers des Düsenaustritts kann besonders einfach die Anströmgeschwindigkeit und somit die Strömungseigenschaften für den Propeller je nach Betriebszustand möglichst optimal eingestellt werden.

Gemäß einer Ausgestaltung wird der Durchmesser des Düsenaustritts mittels Rotation von Flügeln oder Ebenen der Kortdüse eingestellt.

Gemäß einer weiteren Ausgestaltung ist die Kortdüse dazu ausgestaltet und eingerichtet, den Durchmesser des Düsenaustritts mittels Rotation von Flügeln oder Ebenen der Kortdüse einzustellen.

Die Kortdüse kann mehrere konisch verlaufenden Ebenen oder leicht gerundeten Flügeln umfassen, die im Kreis in radialer Richtung um den Propeller angeordnet sind. Durch Rotation der Flügel oder Ebenen wird der Durchmesser des Düsenaustritts vergrößert oder verkleinert. Je nach aktuellem Betriebszustand kann somit die Anströmgeschwindigkeit für den Propeller eingestellt werden.

Mittels Rotation der Flügel oder Ebenen der Kortdüse kann der Durchmesser des Düsenaustritts und somit die Anströmgeschwindigkeit für den Propeller auf besonders einfache Weise eingestellt werden.

Gemäß einer Ausgestaltung kann die Kortdüse entlang der Propellerachse verschoben werden. Dadurch kann eine optimierte Leistungsübertragung vom Propeller auf das Medium oder umgekehrt sichergestellt werden. Die Propellerachse ist hierbei gegeben durch die Achse um die die Propellerblätter rotieren.

Beispielsweise kann durch einen geeigneten Abstand der Düse vor dem Propeller erreicht werden, dass die der Einfluss der Kortdüse auf die Strömung durch den Propeller im Schubmodus verringert oder verstärkt wird.

Die Anströmungsgeschwindigkeit des Propellers kann alternativ auch durch mindestens eine Strömungsklappe eingestellt werden, wobei die Strömungsklappe in Strömungsrichtung vor und/oder hinter der durch den Propeller ausgebildeten Ebene angeordnet ist, wobei eine Schwenkachse der Strömungsklappe bevorzugt vertikal und/oder horizontal ausgerichtet ist.

Die Anströmgeschwindigkeit des Propellers kann auch mit mindestens einer Leitschaufel beeinflusst werden, wobei die mindestens eine Leitschaufel in der Kortdüse oder an der Strömungsklappe fest oder beweglich angebracht sein kann.

Die mindestens eine Leitschaufel ist dabei ein in der Kortdüse oder an der Strömungsklappe angebrachter Strömungswiderstand, der anströmendes Wasser auf die Propellerblätter umlenken kann. So kann beispielsweise die Anströmrichtung und die Anströmgeschwindigkeit des Wassers auf die Propellerblätter angepasst oder optimal gewählt werden.

Insbesondere kann beim Verwenden einer Kortdüse mit mindestens einer Leitschaufel auf ein konisch-zulaufendes, Tragflügel-ähnlichen Profil der Kortdüse verzichtet werden, oder die Ausprägungen des Profils zumindest minimal gehalten werden. Alternativ kann die Leitschaufelform aber auch an das Profil der Kortdüse angepasst werden oder das Kortdüsenprofil und Leitschaufelform aufeinander angepasst werden.

Sofern die mindestens eine Leitschaufel beweglich angebracht ist, kann die Ausrichtung der mindestens einen Leitschaufel variiert werden, um die Anströmung des Propellers einzustellen und insbesondere zu optimieren. Dies kann beispielsweise dadurch geschehen, dass der Anstellwinkel der mindestens einen Leitschaufel so gewählt wird, dass eine maximale Anströmgeschwindigkeit bei den Propellerblättern vorliegt. Sofern die mindestens eine Leitschaufel fest angebracht ist, kann eine optimale Anströmgeschwindigkeit und ein optimaler Anströmwinkel für einen besonders häufigen und/oder besonders angestrebten, festen Strömungszustand vorgegeben werden.

Insbesondere können mehrere Leitschaufeln in der Kortdüse oder an der Strömungsklappe angebracht werden, um so den Strömungswiderstand weiter zu vergrößern.

Bevorzugt ist der Propeller über ein schaltbares Getriebe mit einem Generator zur Erzeugung von Energie durch Hydrogeneration verbunden und eine Anpassungsvorrichtung zur Anpassung des Arbeitspunktes des Getriebes abhängig vom Wirkungsgrad ist vorgesehen.

Gemäß einer Ausgestaltung kann der Propeller des Antriebs um eine vertikale Schwenkachse geschwenkt werden, bevorzugt um mindestens 180° geschwenkt werden, sodass in Abhängigkeit von dem jeweiligen Betriebsmodus eine vorteilhafte Anströmrichtung, bevorzugt die jeweils optimale Anströmungsrichtung, des Propellers aktiv ist.

Eine vertikale Schwenkachse ist hierbei eine Schwenkachse, die parallel zum Lot verläuft, welches typischerweise senkrecht auf der Wasseroberfläche steht.

So kann es beispielsweise beim Fahren oder Halten in einem fließenden Gewässer sinnvoll sein, im Schubmodus den Propeller so auszurichten, dass der Schub entgegen der Fließrichtung gerichtet ist. Im selben Gewässer kann es beispielsweise auch sinnvoll sein in einem Hydrogenerationszustand den Propeller um 180° zu schwenken, so dass das fließende Gewässer den Propeller optimal antreibt und eine effektive Hydrogeneration gewährleistet ist. Besonders beim Ankern oder Liegen an einer Boje kann auf diese Weise die Energie des fließenden Gewässers zur Hydrogeneration ausgenutzt werden.

Insbesondere kann aber auch beim Fahren unter Segeln in beispielsweise stehenden oder ruhigen Gewässern der Propeller so ausgerichtet sein, dass er sich im Hydrogenerationszustand befindet und somit eine effektive Hydrogeneration gewährleistet ist.

Gemäß einer Ausgestaltung ist das Wasserfahrzeug ein Boot oder ein Schiff.

Insbesondere bei Booten oder Schiffen kann das Antriebssystem neben der Erzeugung von Vortrieb oder Schub zum Antrieb des Boots oder Schiffs auch als Hydrogenerator eingesetzt werden.

Durch die Einstellung und Optimierung von Strömungseigenschaften für den Propeller des Antriebssystems abhängig vom Betriebszustand wird der Wirkungsgrad des Antriebssystems in beiden Betriebszuständen, nämlich dem Schubzustand und dem Hydrogenerationszustand, maximiert.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch ein Flussdiagramm eines Verfahrens zum Einstellen von Strömungseigenschaften für einen Propeller eines Antriebssystems abhängig vom Betriebszustand;
- Figur 2: schematisch eine Vorrichtung zum Einstellen der Strömungseigenschaften eines Propellers abhängig von einem ermittelten Betriebszustand eines Antriebssystems;
- Figur 3A, 3B,3C und 3D: schematische Darstellung von Antriebssystemen für ein Wasserfahrzeug; und
- Figur 4: schematisch ein Boot mit einem Antriebssystem umfassend eine Vorrichtung zum Einstellen von Strömungseigenschaften für einen Propeller des Antriebssystems abhängig vom Betriebszustand.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

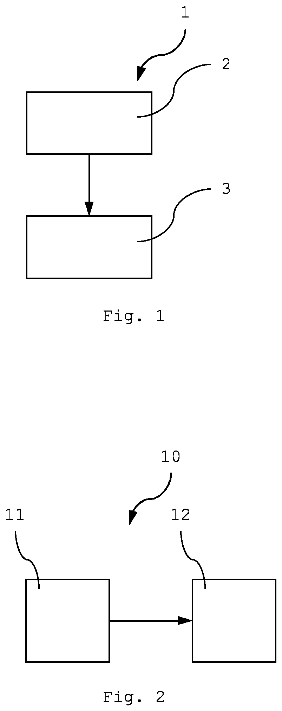

In Figur 1 ist schematisch ein Flussdiagramm eines Verfahrens 1 zum Einstellen von Strömungseigenschaften eines Propellers eines Antriebssystems eines Wasserfahrzeuges abhängig von dessen Betriebszustand 2 dargestellt. Das Antriebssystem kann beispielsweise einen Elektromotor als Antrieb zum Antrieb des Propellers aufweisen.

Zunächst erfolgt in dem Verfahren ein Ermitteln des Betriebszustands 2 des Antriebssystems. Das Antriebssystem kann in einem Schubzustand zum Erzeugen von Schub eingesetzt werden. Mit anderen Worten erzeugt das Antriebssystem dann einen Schub auf das sich im Wasser befindliche Wasserfahrzeug und dient dabei zu dessen Fortbewegung und/oder zum Manövrieren. Dieser Betriebszustand 2 ist ein üblicher Betriebszustand eines Antriebssystems für ein Wasserfahrzeug.

Alternativ kann das Antriebsystem in einem Generatorzustand aber auch zur Erzeugung von elektrischer Energie betrieben werden. Der Generatorzustand ist hier ein Hydrogenerationszustand, in welchem Energie durch Hydrogeneration gewonnen wird. Dies wird dadurch erreicht, dass beispielsweise ein Propeller aufgrund einer Bewegung des Wasserfahrzeugs durchs Wasser so angeströmt wird, dass er durch die Strömung angetrieben wird und entsprechend in Drehung versetzt wird. Diese Drehung wird vom Antrieb dann in elektrische Energie umgewandelt. Bei der Verwendung eines Elektromotors als Antrieb kann dieser entsprechend direkt als Generator verwendet werden.

In einem weiteren Betriebszustand kann Antriebssystem auch in einem freien Zustand betrieben werden, in welchem die einzelnen Komponenten ungebremst vorliegen. Beispielsweise kann sich ein Propeller frei drehen, so dass er bei einer Relativbewegung durchs Wasser angeströmt und gedreht wird.

In einem weiteren Betriebszustand kann das Antriebssystem auch in einem blockierten Zustand vorliegen, in welchem die einzelnen Komponenten gegen eine Bewegung und insbesondere gegen Drehen gesichert sind. Mit anderen Worten dreht ein Propeller im blockierten Zustand bei einer Relativbewegung durchs Wasser nicht mit, so dass hier zwar der Wasserwiderstand des Wasserfahrzeugs ansteigen kann, der Verschleiß an den beweglichen Komponenten jedoch heruntergesetzt wird.

Der Betriebszustand 2 des Antriebssystems kann automatisch eingestellt werden oder der Betriebszustand 2 kann zunächst durch einen Nutzer vorgegeben werden und der Nutzer gibt bevorzugt einen Schubzustand und/oder einen freien Zustand und/oder einen blockierten Zustand und/oder einen Generatorzustand als Betriebszustand 2 vor.

Dieser automatisch eingestellte oder von einem Nutzer vorgegebene Betriebszustand wird ermittelt.

Nach der Ermittlung des Betriebszustands erfolgt ein Einstellen der Strömungseigenschaften 3 des Propellers basierend auf dem ermittelten Betriebszustand. Dabei wird beim Einstellen der Strömungseigenschaften 3 basierend auf dem ermittelten Betriebszustand eine Propellerform des Propellers geändert und/oder eine Anströmgeschwindigkeit des Propellers eingestellt.

Die Propellerform kann durch mindestens eine der folgenden Maßnahmen geändert werden: durch Ändern eines Anstellwinkels mindestens eines Propellerblatts des Propellers, indem das Propellerblatt z.B. um eine individuelle Drehachse herum gegenüber einer Nabe verdreht wird, durch Ändern einer Fläche mindestens eines Propellerblatts, indem das Propellerblatt z.B. über ein bewegliches Skelett, das mit einer Folie umspannt ist, derart verformt wird, dass sich seine Fläche ändert, oder durch Ändern der Anzahl der Propellerblätter, indem z.B. einzelne Propellerblätter eingeklappt oder inaktiv geschaltet werden.

Weiterhin kann die Propellerform durch Ändern der Profildicke in Abhängigkeit vom Radius mindestens eines Propellerblatts 104 und/oder durch Ändern der Profilwölbung mindestens eines Propellerblatts 104 und/oder durch Ändern der Blattrücklage mindestens eines Propellerblatts 104 und/oder durch Ändern des Skew mindestens eines Propellerblatts 104 eingestellt werden.

Ferner kann die Anströmgeschwindigkeit beispielsweise mittels einer Kortdüse eingestellt werden, wobei ein Durchmesser eines Düsenaustritts der Kortdüse eingestellt wird indem Flügel oder Ebenen der Kortdüse entlang der axialen Richtung verschwenkt werden, sodass sich der Durchmesser des Düsenaustritts gegenüber dem Durchmesser des Düseneintritts verringert.

Weiterhin kann die Anströmungsgeschwindigkeit des Propellers 103 durch mindestens eine Strömungsklappe 106 eingestellt wird, wobei die Strömungsklappe 106 bevorzugt in Strömungsrichtung vor und/oder hinter der durch den Propeller 103 ausgebildeten Ebene angeordnet ist, wobei eine Schwenkachse der Strömungsklappe 106 besonders bevorzugt vertikal und/oder horizontal ausgerichtet ist.

Ferner kann die Ausrichtung der mindestens einen Leitschaufel 107 variiert werden, um die Anströmung des Propellers 103 einzustellen und insbesondere zu optimieren.

In Figur 2 ist eine Vorrichtung 10 zum Einstellen von Strömungseigenschaften eines Propellers eines Antriebssystems eines Wasserfahrzeugs abhängig vom Betriebszustand schematisch dargestellt. Das Antriebssystem kann einen Elektromotor als Antrieb aufweisen.

Die Vorrichtung 10 umfasst ein Modul 11 zum Ermitteln eines Betriebszustands, das dazu ausgestaltet und eingerichtet ist, den momentanen Betriebszustand des Antriebssystems zu ermitteln. Es liegt dabei beispielsweise entweder ein Schubzustand oder ein Generatorzustand wie ein Hydrogenerationszustand, in welchem Energie durch Hydrogeneration gewonnen wird, vor.

Ferner umfasst die Vorrichtung 10 Einstellmittel 12 zum Einstellen der Strömungseigenschaften, die dazu ausgestaltet und eingerichtet sind, die Strömungseigenschaften basierend auf dem mit dem Modul 11 ermittelten Betriebszustand einzustellen. Dabei weisen die Einstellmittel 12 zum Einstellen der Strömungseigenschaften beispielsweise einen Propeller auf. Der Propeller ist dazu ausgestaltet und eingerichtet, seine Propellerform zu ändern.

Zudem oder alternativ kann über die Einstellmittel 12 die Anströmgeschwindigkeit eingestellt werden. Die Einstellmittel zum Einstellen der Anströmgeschwindigkeit sind dazu ausgestaltet und eingerichtet, eine Anströmgeschwindigkeit des Propellers einzustellen. Der Propeller ist dabei dazu ausgestaltet und eingerichtet, einen Anstellwinkel von Propellerblättern des Propellers und/oder eine Fläche der Propellerblätter und/oder eine Anzahl der Propellerblätter zu ändern. Das Ändern des Anstellwinkels der Propellerblätter des Propellers erfolgt beispielsweise, indem die Propellerblätter z.B. um eine Drehachse gegenüber einer Nabe verdreht werden.

Das Ändern der Fläche der Propellerblätter erfolgt beispielsweise, indem die Propellerblätter z.B. über ein bewegliches Skelett, das mit einer Folie umspannt ist, derart verformt werden, dass sich ihre Fläche ändert.

Das Ändern der Anzahl der Propellerblätter erfolgt beispielsweise, indem z.B. einzelne Propellerblätter eingeklappt werden.

Die Einstellmittel 12 zum Einstellen der Anströmgeschwindigkeit umfassen zusätzlich oder alternativ beispielsweise eine Kortdüse, wobei die Kortdüse dazu ausgestaltet und eingerichtet ist, einen Durchmesser eines Düsenaustritts der Kortdüse durch Rotation von Flügeln oder Ebenen der Kortdüse einzustellen.

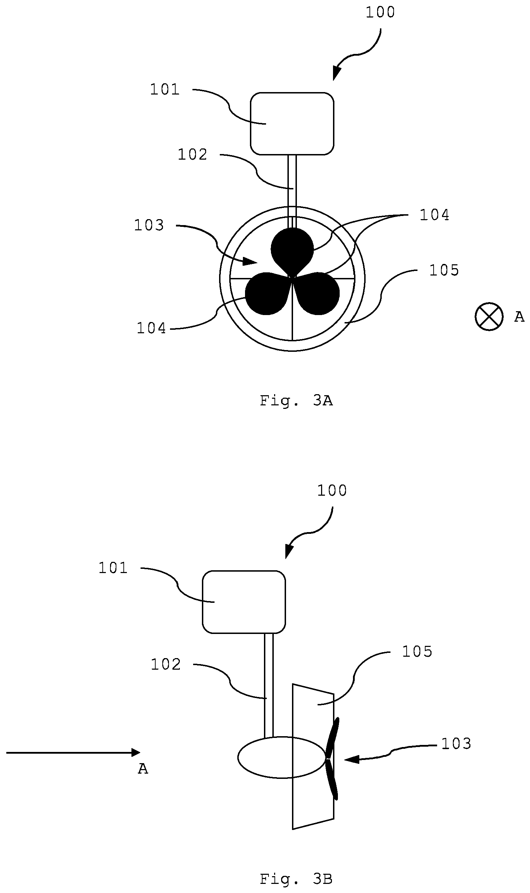

In den Figuren 3A und 3B ist ein Antriebssystem 100 für Wasserfahrzeuge schematisch dargestellt.

Das Antriebssystem 100 umfasst die Vorrichtung 10 gemäß Figur 2. Das Antriebssystem 100 weist einen Elektromotor 101 als Antrieb zum Rotieren eines Propellers 103 auf. Das Antriebssystem 100 beziehungsweise der Elektromotor 101 kann zum Erzeugen von Schub in einem Schubzustand eingesetzt werden. Alternativ kann das Antriebsystem 100 beziehungsweise der Elektromotor 101 auch zur Erzeugung von elektrischer Energie in einem Generatorzustand betrieben werden und damit entsprechend als Generator dienen. Der Generatorzustand ist hier ein Hydrogenerationszustand, in welchem Energie durch Hydrogeneration gewonnen wird.

Zur Kraftübertragung weist das Antriebssystem 100 ein Getriebe 102 auf. Das Getriebe 102 koppelt den Elektromotor 101 mit dem Propeller 103. Entweder wird der Propeller 103 im Schubzustand über das Getriebe 102 durch den Elektromotor 101 angetrieben und erzeugt dabei Schub oder der Elektromotor 101 wird im Generatorzustand beziehungsweise Hydrogenerationszustand über das Getriebe 102 von dem Propeller 103 angetrieben, der beispielsweise durch eine Strömung in einem Fluss, durch eine Gezeitenströmung, durch eine Bewegung des Wasserfahrzeugs durch das Wasser aufgrund der Trägheit des Wasserfahrzeugs oder durch eine Bewegung des Wasserfahrzeugs mit einem anderen Antrieb - beispielsweise durch ein Segel oder einen Kite - in Bewegung versetzt wird.

Das Getriebe 102 kann bevorzugt als schaltbares Getriebe 102 ausgebildet sein, wobei eine Anpassungsvorrichtung zur Anpassung des Arbeitspunktes des Getriebes abhängig vom Wirkungsgrad vorgesehen ist. Damit kann der Generator 101 durch ein entsprechendes Schalten des schaltbaren Getriebes 102 im optimalen Bereich betrieben werden.

Um den jeweiligen Betriebszustand so optimal wie möglich durchführen zu können, kann die Propellerform des Propellers 103 dementsprechend angepasst werden. Dazu kann ein Anstellwinkel von Propellerblättern 104 des Propellers 103 geändert und/oder die Fläche der Propellerblätter 104 geändert und/oder die Anzahl der Propellerblätter 104 geändert werden.

Das Ändern des Anstellwinkels der Propellerblätter 104 des Propellers 103 kann erfolgen, indem die Propellerblätter 104 z. B. um eine Drehachse gegenüber einer Nabe verdreht werden. Das Ändern der Fläche der Propellerblätter 104 kann erfolgen, indem die Propellerblätter 104 z.B. über ein bewegliches Skelett, das mit einer Folie umspannt ist, derart verformt werden, dass sich ihre Fläche ändert. Das Ändern der Anzahl der Propellerblätter 104 kann erfolgen, indem z.B. einzelne Propellerblätter 104 eingeklappt werden.

Zudem oder alternativ kann das Antriebssystem 100 eine verstellbare Kortdüse 105 aufweisen, die die Anströmgeschwindigkeit des Propellers 103 einstellt. Die Kortdüse 105 ist vor dem Propeller 103 angeordnet und kann einen Durchmesser eines Düsenaustritts der Kortdüse 105 durch Rotation von Flügeln oder Ebenen der Kortdüse 105 einstellen.

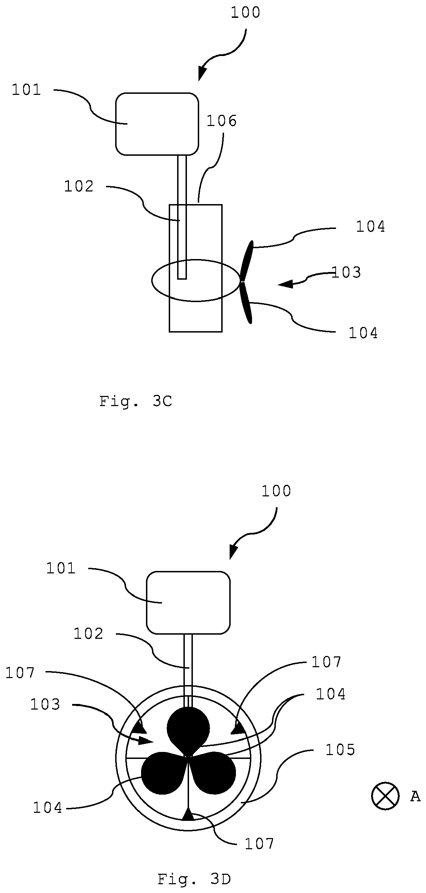

In Figur 3C ist in einer alternativen Ausbildung anstelle der Kortdüse 105 der Figuren 3A und 3B nun eine Strömungsklappe 106 vorgesehen, mittels welcher die Anströmgeschwindigkeit des Propellers 103 beeinflusst werden kann. Die Anströmrichtung A ist dabei schematisch in der Figur 3B gezeigt. Bevorzugt können auch zwei oder mehrere Strömungsklappen 106 vorgesehen sein.

Die Strömungsklappe 106 kann in Strömungsrichtung vor und/oder hinter der durch den Propeller 103 ausgebildeten Ebene angeordnet sein, wobei eine Schwenkachse der Strömungsklappe 106 besonders bevorzugt vertikal und/oder horizontal ausgerichtet sein kann. In Figur 3C ist jedoch die bevorzugte Positionierung der Strömungsklappe 106 in Strömungsrichtung vor dem Propeller im Anströmbereich gezeigt.

In Figur 3D sind in einer alternativen Ausbildung in der Kortdüse 105 der Figur 3A drei (also mehrere) Leitschaufeln 107 vorgesehen, mittels welcher die Anströmgeschwindigkeit des Propellers 103 beeinflusst werden kann.

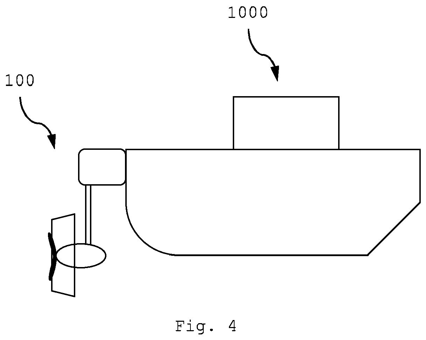

In Figur 4 ist ein Wasserfahrzeug 1000 mit dem Antriebssystem 100 gemäß den Figuren 3A und 3B schematisch dargestellt. Das Wasserfahrzeug 1000 kann ein Boot oder ein Schiff sein.

Zum Antreiben des Wasserfahrzeugs 1000 kann das Antriebssystem 100 in einem Schubzustand Schub erzeugen. In einem Generatorzustand, der hier ein Hydrogenerationszustand ist, bei dem Energie durch Hydrogeneration gewonnen wird, kann das Antriebssystem 100 auch zum Umwandeln von Strömungsenergie in elektrische Energie eingesetzt werden.

Durch die Vorrichtung 10 des Antriebssystems 100, die das Verfahren 1 gemäß Figur 1 umsetzt, werden die Strömungseigenschaften basierend auf dem ermittelten Betriebszustand des Antriebssystems 100 eingestellt.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Verfahren
- 2: Ermitteln des Betriebszustands
- 3: Einstellen der Strömungseigenschaften
- 10: Vorrichtung
- 11: Modul
- 12: Einstellmittel
- 100: Antriebssystem
- 101: Elektromotor / Generator
- 102: Getriebe
- 103: Propeller
- 104: Propellerblatt
- 105: Kortdüse
- 106: Strömungsklappe
- 107: Leitschaufel
- 1000: Wasserfahrzeug
- A: Anströmrichtung

## Patentansprüche

1. Verfahren (1) zum Einstellen von Strömungseigenschaften eines Propellers (103) eines Antriebssystems (100) mit einem Elektromotor für Wasserfahrzeuge (1000) abhängig vom Betriebszustand, umfassend die Schritte:
- Ermitteln des Betriebszustands (2) des Antriebssystems (100), wobei in dem Antriebssystem (100) entweder ein Schubzustand oder ein freier Zustand oder ein blockierter Zustand oder ein Generatorzustand vorliegt;
- Einstellen der Strömungseigenschaften (3) des Propellers (103) basierend auf dem ermittelten Betriebszustand, wobei eine Anströmgeschwindigkeit des Propellers (103) eingestellt wird; wobei
die Anströmgeschwindigkeit mittels einer Kortdüse (105) eingestellt wird, wobei ein Durchmesser eines Düsenaustritts der Kortdüse (105) eingestellt wird, oder
die Anströmungsgeschwindigkeit des Propellers (103) durch mindestens eine Strömungsklappe (106) eingestellt wird, wobei die Strömungsklappe (106) in Strömungsrichtung vor und/oder hinter der durch den Propeller (103) ausgebildeten Ebene angeordnet ist.

2. Verfahren (1) gemäß Anspruch 1, **dadurch gekennzeichnet, dass** der Betriebszustand (2) des Antriebssystems zunächst durch einen Nutzer vorgegeben wird und der Nutzer bevorzugt einen Schubzustand und/oder einen freien Zustand und/oder einen blockierten Zustand und/oder einen Generatorzustand als Betriebszustand (2) vorgibt.

3. Verfahren gemäß Anspruch 1 oder 2, **dadurch gekennzeichnet, dass** im Fall der Kortdüse (105) der Durchmesser des Düsenaustritts mittels Rotation von Flügeln oder Ebenen der Kortdüse (105) eingestellt wird.

4. Verfahren gemäß einem der vorigen Ansprüche, **dadurch gekennzeichnet, dass** die Ausrichtung mindestens einer Leitschaufel (107) variiert wird, um die Anströmung des Propellers (103) einzustellen.

5. Antriebssystem (100) für ein Wasserfahrzeug (1000), umfassend einen Elektromotor zum Antreiben des Wasserfahrzeugs (1000), einen Propeller (103) und eine Vorrichtung (10) zum Einstellen von Strömungseigenschaften des Propellers (103), abhängig vom Betriebszustand, umfassend:
- ein Modul (11) zum Ermitteln eines Betriebszustands, wobei das Modul dazu ausgestaltet und eingerichtet ist, den Betriebszustand des Antriebssystems (100) zu ermitteln, wobei in dem Antriebssystem (100) entweder ein Schubzustand oder ein freier Zustand oder ein blockierter Zustand oder ein Generatorzustand vorliegt, wobei das Modul (11) anhand eines oder mehrerer Entscheidungskriterien prüft, ob der Schubzustand oder der Generatorzustand vorliegt;
- Einstellmittel (12) zum Einstellen der Strömungseigenschaften des Propellers (103), wobei die Einstellmittel (12) dazu ausgestaltet und eingerichtet sind, die Strömungseigenschaften basierend auf dem ermittelten Betriebszustand einzustellen, wobei die Einstellmittel (12) dazu ausgestaltet und eingerichtet sind, eine Anströmgeschwindigkeit des Propellers (103) einzustellen; wobei
die Einstellmittel (12) eine Kortdüse (105) umfassen, die dazu ausgestaltet und eingerichtet ist, um durch Einstellen eines Durchmessers eines Düsenaustritts der Kortdüse (105) die Anströmgeschwindigkeit des Propellers (103) einzustellen, oder
mindestens eine Strömungsklappe (106) zur Einstellung der Anströmungsgeschwindigkeit des Propellers (103) vorgesehen ist, wobei die Strömungsklappe (106) in Strömungsrichtung vor und/oder hinter der durch den Propeller (103) ausgebildeten Ebene angeordnet ist.

6. Antriebssystem (100) gemäß Anspruch 5, **dadurch gekennzeichnet, dass** eine Vorgabevorrichtung zum Vorgeben des Betriebszustands (2) des Antriebssystems (100) durch einen Nutzer vorgesehen ist und der Nutzer bevorzugt über die Vorgabevorrichtung einen Schubzustand und/oder einen freien Zustand und/oder einen blockierten Zustand und/oder einen Generatorzustand als Betriebszustand (2) vorgeben kann.

7. Antriebssystem (100) gemäß Anspruch 5 oder 6, **dadurch gekennzeichnet, dass** die Einstellmittel (12) den Propeller (103) umfassen, der dazu ausgestaltet und eingerichtet ist, seine Propellerform zu ändern, wobei der Propeller (103) dazu ausgestaltet und eingerichtet ist, einen Anstellwinkel mindestens eines Propellerblatts (104) des Propellers (103) und/oder eine Fläche mindestens eines Propellerblatts (104) und/oder eine Anzahl der Propellerblätter (104) und/oder eine Profildicke in Abhängigkeit vom Radius mindestens eines Propellerblatts (104) und/oder eine Profilwölbung mindestens eines Propellerblatts (104) und/oder eine Blattrücklage mindestens eines Propellerblatts (104) und/oder des Skew mindestens eines Propellerblatts (104) einzustellen.

8. Antriebssystem (100) gemäß einem der Ansprüche 5 bis 7, **dadurch gekennzeichnet, dass** im Fall der Kortdüse (105) die Kortdüse (105) dazu ausgestaltet und eingerichtet ist, den Durchmesser des Düsenaustritts mittels Rotation von Flügeln oder Ebenen der Kortdüse (105) einzustellen.

9. Antriebssystem (100) gemäß einem der Ansprüche 5 bis 8, **dadurch gekennzeichnet, dass** im Fall der Kortdüse (105) die Kortdüse (105) entlang der Propellerachse verschoben werden kann.

10. Antriebssystem (100) gemäß einem der Ansprüche 5 bis 7, **dadurch gekennzeichnet, dass** im Fall der Strömungsklappe (106) eine Schwenkachse der Strömungsklappe (106) vertikal und/oder horizontal ausgerichtet ist.

11. Antriebssystem (100) gemäß einem der Ansprüche 5 bis 10, **dadurch gekennzeichnet, dass** mit mindestens einer Leitschaufel (107) die Anströmgeschwindigkeit des Propellers (103) beeinflusst wird, wobei die mindestens eine Leitschaufel (107) in der Kortdüse (105) oder an der Strömungsklappe (106) fest oder beweglich angebracht sein kann.

12. Antriebssystem (100) gemäß einem der Ansprüche 5 bis 11, **dadurch gekennzeichnet, dass** der Propeller (103) über ein schaltbares Getriebe (102) mit einem Generator (101) zur Erzeugung von Energie durch Hydrogeneration verbunden ist und wobei eine Anpassungsvorrichtung zur Anpassung des Arbeitspunktes des Getriebes (102) abhängig vom Wirkungsgrad vorgesehen ist und/oder wobei der Propeller des Antriebs um eine vertikale Schwenkachse geschwenkt werden kann, bevorzugt um 180° geschwenkt werden kann, sodass in Abhängigkeit von dem jeweiligen Betriebsmodus eine vorteilhafte Anströmungsrichtung des Propellers aktiv ist.

## Claims

1. Method (1) for adjusting flow properties of a propeller (103) of a drive system (100) with an electric motor for watercrafts (1000) depending on the operating state, comprising the steps:
- determining the operating state (2) of the drive system (100), wherein, in the drive system (100), there is either a thrust state or a free state or a blocked state or a generator state;
- adjusting the flow characteristics (3) of the propeller (103), based on the determined operating state, wherein the inflow velocity of the propeller (103) is adjusted; wherein
the inflow velocity is adjusted by means of a Kort nozzle (105), wherein a diameter of a nozzle outlet of the Kort nozzle (105) is adjusted, or
the inflow velocity of the propeller (103) is adjusted by at least one flow flap (106), wherein the flow flap (106) is arranged in the flow direction in front of and/or behind the plane formed by the propeller (103).

2. The method (1) according to claim 1, **characterized in that** the operating state (2) of the drive system is initially specified by a user and the user preferably specifies a thrust state and/or a free state and/or a blocked state and/or a generator state as the operating state (2).

3. The method according to claim 1 or 2, **characterized in that** in the case of the Kort nozzle (105) the diameter of the nozzle outlet is adjusted by means of rotation of vanes or planes of the Kort nozzle (105).

4. The method according to any one of the preceding claims, **characterized in that** the orientation of at least one guide vane (107) is varied in order to adjust the inflow of the propeller (103).

5. Drive system (100) for a watercraft (1000), comprising an electric motor for driving the watercraft (1000), a propeller (103) and a device (10) for adjusting flow characteristics of the propeller (103) depending on the operating state, comprising:
- a module (11) for determining an operating state, wherein the module is designed and configured to determine the operating state of the drive system (100), wherein, in the drive system (100), either a thrust state or a free state or a blocked state or a generator state is present, wherein the module (11) checks on the basis of one or more decision criteria whether the thrust state or the generator state is present;
- adjustment means (12) for adjusting the flow characteristics of the propeller (103), wherein the adjustment means (12) are designed and configured to adjust the flow characteristics based on the determined operating state, wherein the adjustment means (12) are designed and configured to adjust an inflow velocity of the propeller (103); wherein
the adjusting means (12) comprise a Kort nozzle (105) which is designed and configured to adjust the inflow velocity of the propeller (103) by adjusting a diameter of a nozzle outlet of the Kort nozzle (105), or
at least one flow flap (106) is provided for adjusting the inflow velocity of the propeller (103), wherein the flow flap (106) is arranged in the flow direction in front of and/or behind the plane formed by the propeller (103).

6. The drive system (100) according to claim 5, **characterized in that** a presetting device is provided for presetting the operating state (2) of the drive system (100) by a user, and the user can preferably preset a thrust state and/or a free state and/or a blocked state and/or a generator state as the operating state (2) via the presetting device.

7. The drive system (100) according to claim 5 or 6, **characterized in that** the adjusting means (12) comprise the propeller (103), which is designed and configured to change its propeller shape, wherein the propeller (103) is designed and configured to adjust an angle of attack of at least one propeller blade (104) of the propeller (103), and/or an area of at least one propeller blade (104), and/or a number of propeller blades (104), and/or a profile thickness as a function of the radius of at least one propeller blade (104), and/or a profile curvature of at least one propeller blade (104), and/or a blade setback of at least one propeller blade (104), and/or the skew of at least one propeller blade (104).

8. The drive system (100) according to any one of claims 5 to 7, **characterized in that,** in the case of the Kort nozzle (105), the Kort nozzle (105) is designed and configured to adjust the diameter of the nozzle outlet by means of rotation of vanes or planes of the Kort nozzle (105).

9. The drive system (100) according to any one of claims 5 to 8, **characterized in that,** in the case of the Kort nozzle (105), the Kort nozzle (105) can be displaced along the propeller axis.

10. The drive system (100) according to any one of claims 5 to 7, **characterized in that,** in the case of the flow flap (106), a pivot axis of the flow flap (106) is oriented vertically and/or horizontally.

11. The drive system (100) according to any one of claims 5 to 10, **characterized in that** the inflow velocity of the propeller (103) is influenced by at least one guide vane (107), wherein the at least one guide vane (107) can be fixedly or movably mounted in the Kort nozzle (105) or on the flow flap (106).

12. The drive system (100) according to any one of claims 5 to 11 , **characterized in that** the propeller (103) is connected via a switchable gearbox (102) to a generator (101) for generating energy by hydrogeneration and wherein an adaptation device is provided for adapting the operating point of the gearbox (102) depending on the efficiency and/or wherein the propeller of the drive can be pivoted about a vertical pivot axis, preferably pivoted by 180°, such that an advantageous inflow direction of the propeller is active depending on the respective operating mode.

## Revendications

1. Procédé (1) de réglage de caractéristiques d'écoulement d'une hélice (103) d'un système d'entraînement (100) avec un moteur électrique pour embarcations (1000) en fonction de l'état de fonctionnement, comprenant les étapes :
- de détermination de l'état de fonctionnement (2) du système d'entraînement (100), dans lequel le système d'entraînement (100) présente soit un état de poussée, soit un état libre, soit un état bloqué, soit un état de générateur ;
- de réglage des caractéristiques d'écoulement (3) de l'hélice (103) sur la base de l'état de fonctionnement déterminé, dans lequel une vitesse d'écoulement de l'hélice (103) est réglée ; dans lequel
la vitesse d'écoulement est réglée au moyen d'une buse Kort (105), dans lequel un diamètre d'une sortie de buse de la buse Kort (105) est réglé, ou
la vitesse d'écoulement de l'hélice (103) est réglée par au moins un volet d'écoulement (106), dans lequel le volet d'écoulement (106) est disposé dans la direction d'écoulement devant et/ou derrière du plan réalisé par l'hélice (103).

2. Procédé (1) selon la revendication 1, **caractérisé en ce que** l'état de fonctionnement (2) du système d'entraînement est tout d'abord spécifié par un utilisateur et l'utilisateur spécifie de manière préférée un état de poussée et/ou un état libre et/ou un état bloqué et/ou un état de générateur comme état de fonctionnement (2).

3. Procédé selon la revendication 1 ou 2, **caractérisé en ce que,** dans le cas de la buse Kort (105), le diamètre de la sortie de buse est réglé par rotation d'ailes ou de plans de la buse Kort (105).

4. Procédé selon l'une quelconque des revendications précédentes, **caractérisé en ce que** l'orientation d'au moins une aube directrice (107) est modifiée pour régler l'écoulement de l'hélice (103).

5. Système d'entraînement (100) pour une embarcation (1000), comprenant un moteur électrique pour entraîner l'embarcation (1000), une hélice (103) et un dispositif (10) pour régler des propriétés d'écoulement de l'hélice (103), en fonction de l'état de fonctionnement, comprenant :
- un module (11) de détermination d'un état de fonctionnement, dans lequel le module est configuré et mis au point pour déterminer l'état de fonctionnement du système d'entraînement (100), dans lequel le système d'entraînement (100) présente soit un état de poussée soit un état libre soit un état bloqué soit un état de générateur, dans lequel le module (11) vérifie à l'aide d'un ou de plusieurs critères de décision si l'état de poussée ou l'état de générateur est présent ;
- des moyens de réglage (12) pour régler les caractéristiques d'écoulement de l'hélice (103), dans lequel les moyens de réglage (12) sont configurés et mis au point pour régler les caractéristiques d'écoulement sur la base de l'état de fonctionnement déterminé, dans lequel les moyens de réglage (12) sont configurés et mis au point pour régler une vitesse d'écoulement de l'hélice (103) ; dans lequel
les moyens de réglage (12) comprennent une buse Kort (105) qui est configurée et mise au point pour régler, par le réglage d'un diamètre d'une sortie de buse de la buse Kort (105), la vitesse d'écoulement de l'hélice (103), ou
au moins un volet d'écoulement (106) est prévu pour régler la vitesse d'écoulement de l'hélice (103), dans lequel le volet d'écoulement (106) est disposé dans la direction d'écoulement devant et/ou derrière le plan réalisé par l'hélice (103).

6. Système d'entraînement (100) selon la revendication 5, **caractérisé en ce qu'un** dispositif de présélection est prévu pour spécifier l'état de fonctionnement (2) du système d'entraînement (100) par un utilisateur et l'utilisateur peut spécifier de préférence un état de poussée et/ou un état libre et/ou un état bloqué et/ou un état de générateur comme état de fonctionnement (2) par l'intermédiaire du dispositif de présélection.

7. Système d'entraînement (100) selon la revendication 5 ou 6, **caractérisé en ce que** les moyens de réglage (12) comprennent l'hélice (103) qui est configurée et mise au point pour modifier sa forme d'hélice, dans lequel l'hélice (103) est configurée et mise au point pour modifier un angle d'inclinaison d'au moins une pale d'hélice (104) de l'hélice (103) et/ou une surface d'au moins une pale d'hélice (104) et/ou un nombre de pales d'hélice (104) et/ou une épaisseur de profil en fonction du rayon d'au moins une pale d'hélice (104) et/ou une courbure de profil d'au moins une pale d'hélice (104) et/ou une position de recul de pale d'au moins une pale d'hélice (104) et/ou skew de la pale d'au moins une pale d'hélice (104).

8. Système d'entraînement (100) selon l'une quelconque des revendications 5 à 7, **caractérisé en ce que,** dans le cas de la buse Kort (105), la buse Kort (105) est configurée et mise au point pour régler le diamètre de la sortie de buse par rotation d'ailes ou de plans de la buse Kort (105).

9. Système d'entraînement (100) selon l'une quelconque des revendications 5 à 8, **caractérisé en ce que,** dans le cas de la buse Kort (105), la buse Kort (105) peut être coulissée le long de l'axe d'hélice.

10. Système d'entraînement (100) selon l'une quelconque des revendications 5 à 7, **caractérisé en ce qu'un** axe de pivotement du volet d'écoulement (106) est orienté verticalement et/ou horizontalement dans le cas du volet d'écoulement (106).

11. Système d'entraînement (100) selon l'une quelconque des revendications 5 à 10, **caractérisé en ce qu'au** moins une aube directrice (107) influence la vitesse d'écoulement de l'hélice (103), dans lequel l'au moins une aube directrice (107) peut être installée de manière fixe ou mobile dans la buse Kort (105) ou sur le volet d'écoulement (106).

12. Système d'entraînement (100) selon l'une quelconque des revendications 5 à 11, **caractérisé en ce que** l'hélice (103) est reliée par une boîte de vitesses commutable (102) à un générateur (101) pour la production d'énergie par hydrogénération et dans lequel un dispositif d'adaptation pour l'adaptation du point de travail de la boîte de vitesses (102) en fonction du rendement est prévu et/ou dans lequel l'hélice de l'entraînement peut être pivotée autour d'un axe de pivotement vertical, de manière préférée peut être pivotée de 180°, si bien qu'en fonction du mode de fonctionnement respectif, une direction d'écoulement avantageuse de l'hélice est active.
